# EUROPÄISCHE PATENTANMELDUNG

(11) **EP 0 887 250 A2**
(43) Veröffentlichungstag der Anmeldung: **30.12.1998**
(21) Anmeldenummer: 98111458.0
(22) Anmeldetag: 22.06.1998
(51) Int. Cl.: B62J 7/08, B62J 9/00

(54) **Halterung für Behälter im allgemeinen und Aktenkoffer im besonderen, geeignet für Motorräder und dergleichen**

(30) Priorität: 24.06.1997 IT MI971491
(71) Anmelder: Visenzi, Giuseppe, I-25100 Brescia (IT)
(72) Erfinder: Visenzi, Giuseppe, I-25100 Brescia (IT)
(74) Vertreter: Seibert, Rudolf, Dipl.-Ing.

(57) **Zusammenfassung**

Die Erfindung bezieht sich auf eine für Motorräder u. dgl. geeignete Halterung (1) für Behälter im allgemeinen und Aktenkoffer im besonderen, wobei die Besonderheit der Halterung (1) in einer Platte (2) besteht, die an einem Motorrad befestigt werden kann und dadurch gekennzeichnet ist, daß sie an einem Ende ein Rückhalteteil (3) und am anderen Ende ein Gleitelement (4) aufweist, das teleskopisch aus der Platte (2) herausgezogen werden kann. Das Gleitelement (4) ist mit einem Sperrteil (6) versehen, das seinerseits teleskopisch aus dem Gleitelement (4) herausgezogen werden kann. Dank diesem Sperrteil (6) und dem vorgenannten Rückhalteteil (3) kann ein Aktenkoffer an der Platte (2) befestigt werden.

## Beschreibung

Die vorliegende Erfindung betrifft eine für Motorräder u. dgl. geeignete Halterung für Behälter im allgemeinen und Aktenkoffer im besonderen. Insbesondere betrifft die Erfindung eine Aktenkofferhalterung, die am Gepäckträger oder am Rahmen des Motorrads zu montieren ist.

Bekanntlich bereitet der Transport von Gegenständen, wie zum Beispiel Behältern und Hoffern, auf einem Motorrad seit jeher Probleme, da es schwierig ist, den richtigen und geeigneten Platz für diese Gegenstände auf dem Motorrad zu finden.

Die gebräuchlichste Lösung besteht darin, diese Gegenstände mittels elastischer Riemen am Gepäckträger zu befestigen. Diese Lösung ist jedoch nicht die beste, da es sehr schwierig ist, den jeweiligen Gegenstand nur mit Hilfe der elastischen Riemen stabil zu befestigen. Außerdem können die an den Enden der elastischen Riemen angebrachten Haken die lackierten Teile des Motorrads beschädigen.

Als Alternative finden sich auf dem Markt Kunststoffschalenkoffer, die am Gepäckträger oder am Rahmen des Motorrads montiert werden können und in die man die gewünschten Gegenstände einlegen kann. Wenn jedoch der zu transportierende Gegenstand ein kleiner Behälter im allgemeinen oder ein Aktenkoffer im besonderen ist, sind die vorgenannten Schalenkoffer im allgemeinen nicht ausreichend geräumig, so daß der Benutzer keine solchen Behälter transportieren kann.

Dies ist ein wichtiges Thema angesichts der weiten Verbreitung von Motorrädern, die als Verkehrsmittel von Leuten genutzt werden, die Aktenkoffer mit sich tragen müssen und hierzu die oben genannten Schalenkoffer nicht nutzen können.

Der vorliegenden Patentanmeldung liegt die Aufgabe zu Grunde, für Behälter im allgemeinen und Aktenkoffer im besonderen eine Halterung zu entwickeln, die leicht am Gepäckträger oder Rahmen eines Motorrads befestigt und den verschiedenen Abmessungen dieser Behälter und Aktenkoffer angepaßt werden kann.

Eine weitere Aufgabe der vorliegenden Patentanmeldung besteht in der Entwicklung einer Halterung für Behälter und Aktenkoffer, die leicht zu handhaben ist und es gleichzeitig ermöglicht, den gewünschten Gegenstand stabil zu befestigen, damit er während der Motorradfahrt nicht gefährlich ist.

Außerdem soll die vorgenannte, für Motorräder u. dgl. geeignete Halterung in hohem Maße zuverlässig sein und zu einem konkurrenzfähigen Preis leicht herstellbar sein.

Die Besonderheit dieser für Motorräder und dergl. geeigneten Halterung für Behälter im allgemeinen und Aktenkoffer im besonderen besteht in einer Platte, die an einem Motorrad befestigt werden kann und dadurch gekennzeichnet ist, daß sie an einem Ende ein Rückhalteteil und am anderen Ende ein Gleitelement aufweist, das teleskopisch aus der Platte herausgezogen werden kann. Das Gleitelement ist mit einem Sperrteil versehen, das seinerseits teleskopisch aus dem Gleitelement herausgezogen werden kann. Dank diesem Sperrteil und dem vorgenannten Rückhalteteil kann ein Aktenkoffer an der Platte befestigt werden.

Weitere Merkmale und Vorteile gehen aus den beiliegenden Zeichnungen hervor, die eine bevorzugte (aber nicht einzig mögliche) Ausführungsform der vorliegenden Halterung veranschaulichen.

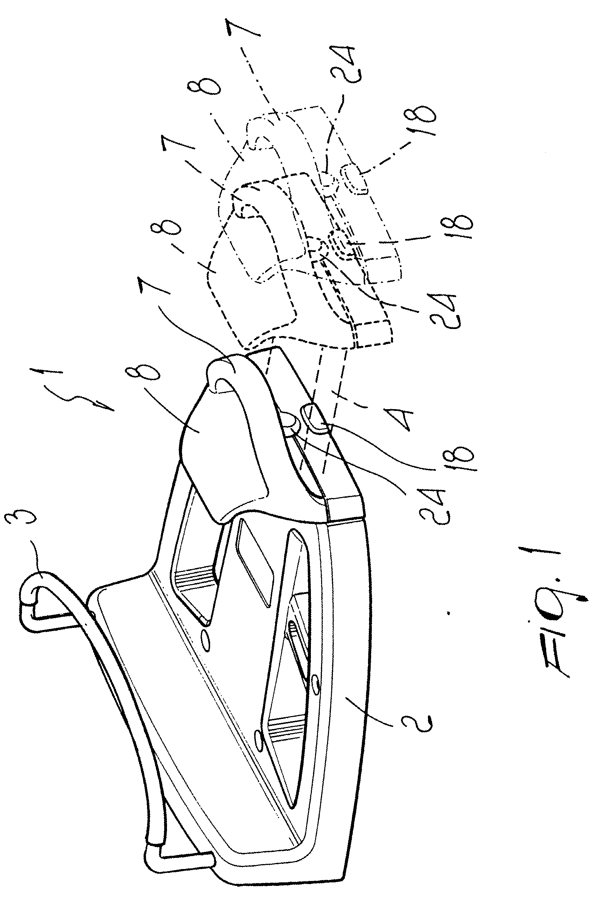

- Figur 1: ist eine perspektivische Ansicht der anmeldungsgemäßen Halterung, wobei verschiedene Einstellpositionen der Halterung in durchgezogener Linie, strichliniert bzw. strichpunktiert dargestellt sind;
- Figur 2: ist eine perspektivische Ansicht der Halterung von unten;

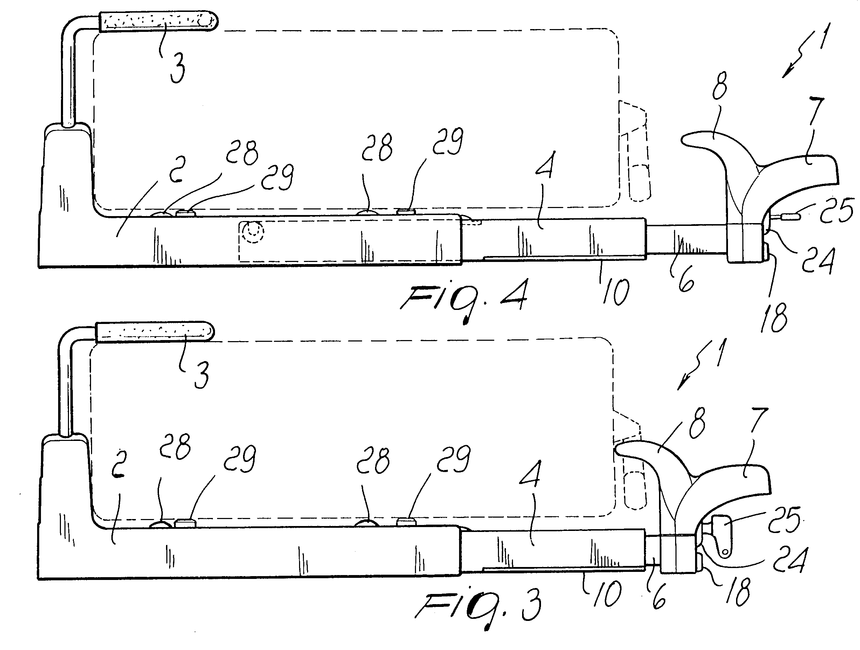

- Figur 3: ist eine Seitenansicht der Halterung in deren geschlossener Stellung zum Einschließen eines Gegenstands;
- Figur 4: ist eine Seitenansicht der Halterung in deren offener Stellung zum Einführen eines einzuschließenden Gegenstands;
- Figur 5: ist eine Seitenansicht eines vertikalen Schnitts durch die Halterung in deren geschlossener Stellung zum Einschließen eines Gegenstands (wie in Figur 3 dargestellt);

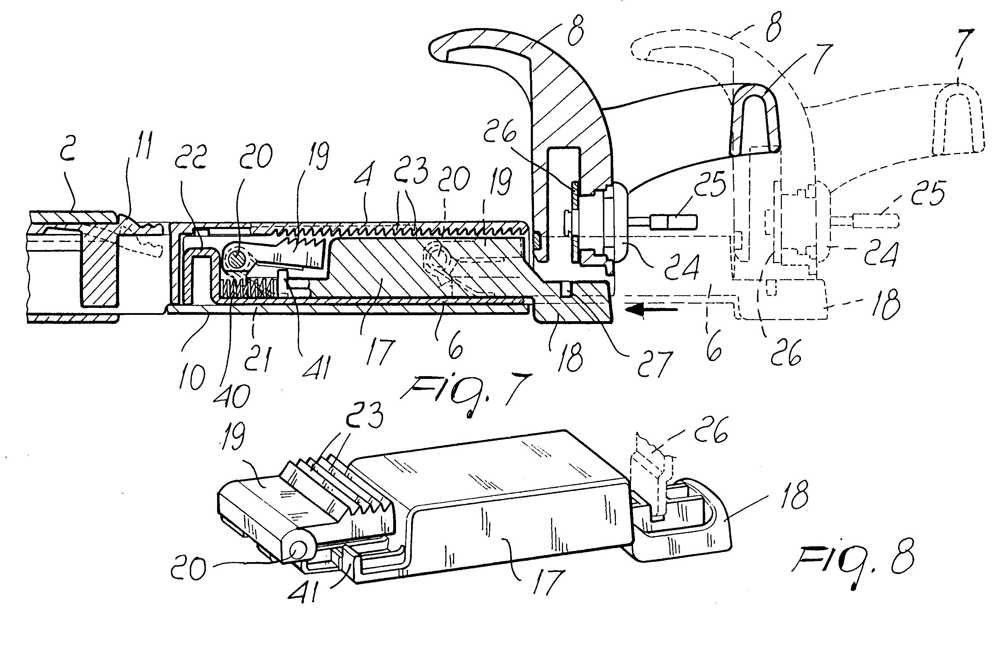

- Figur 6: ist eine Seitenansicht eines vertikalen Schnitts durch die Halterung in deren offener Stellung zum Einführen eines einzuschließenden Gegenstands (wie in Figur 4 dargestellt);
- Figur 7: ist eine Teilansicht, von der Seite und im Vertikalschnitt, zur Veranschaulichung der Öffnungs- und Schließbewegung der Halterung;
- Figur 8: ist eine perspektivische Ansicht des Öffnungs-/Schließ-Gleitblocks der Halterung.

Wie aus den vorgenannten Zeichnungsfiguren ersichtlich, besteht die mit der Bezugsziffer 1 bezeichnete Halterung aus einer L-förmigen Platte 2, die am Gepäckträger oder am Rahmen des Motorrads zu montieren ist und an ihrem einen Ende mit einem Rückhaltebügel 3 ausgestattet ist, dessen Höhenposition einstellbar ist, damit (nicht dargestellte) Aktenkoffer oder Behälter verschiedener Dicken eingelegt und unter dem Rückhaltebügel 3 eingeklemmt werden können.

Dieser Bügel 3 besteht aus einem höhenverstellbaren bogenförmigen Rohrstück, das aus dem kurzen Schenkel der L-förmigen Platte 2 ragt.

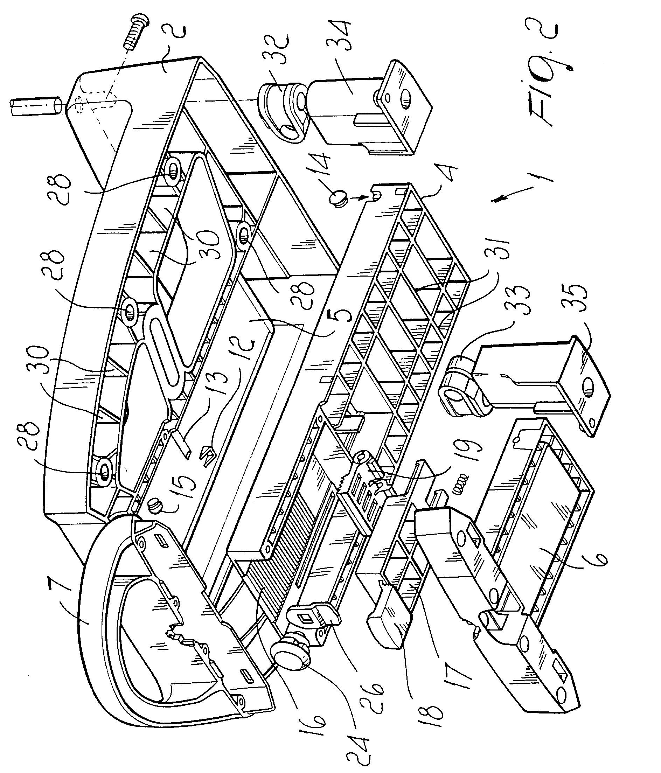

Aus dem anderen Ende der Platte 2 kann ein Gleitelement 4 teleskopisch herausgezogen werden. Das Gleitelement 4 läuft in einer Nut 5, die an der Unterseite der Platte 2 ausgespart ist, wie in Figur 2 gezeigt.

Ferner kann aus dem Gleitelement 4 wiederum teleskopisch ein Sperrteil 6 herausgezogen werden, welches mit einem Handgriff 7 versehen ist, der auf einen Aktenkoffergriff einstellbar ist, um im Zusammenwirken mit dem Rückhaltebügel 3 den Aktenkoffer an der Platte 2 festzulegen.

Das Gleitelement 4 wird in der Platten-Nut 5 mittels eines Flachstücks 9 gehalten, das quer zur Nut 5 verläuft und mittels Schrauben so an der Platte 2 befestigt ist, daß das Gleitelement 4 in der genannten Nut zu laufen vermag.

In Längsrichtung des Gleitelements 4 ist an der Unterseite seines Endes ein Flachstück 10 angeordnet, das nach Gestalt und Abmessungen dem Flachstück 9 gleicht, wie weiter unten näher beschrieben.

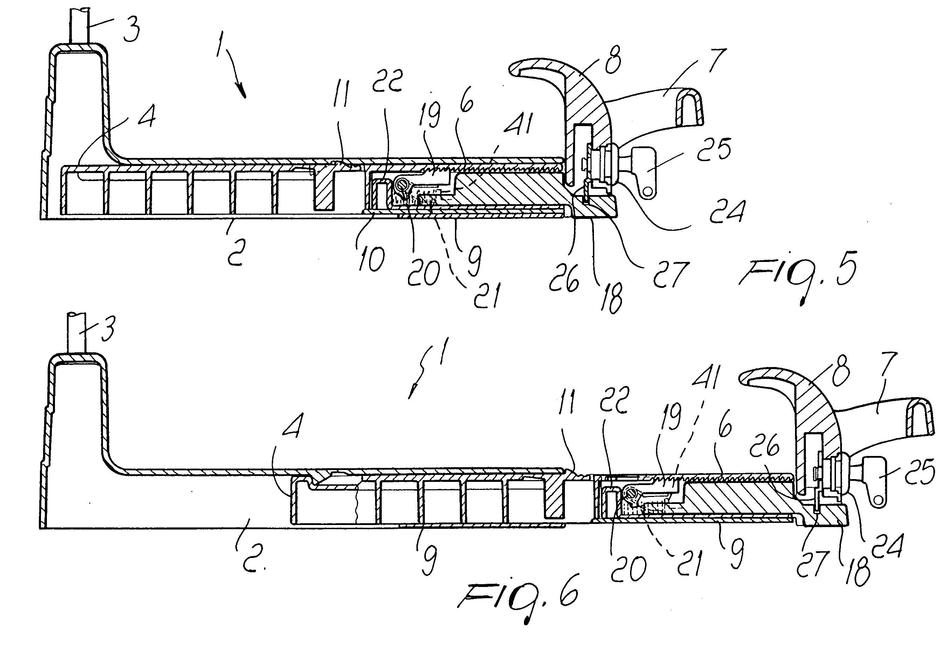

Die (in Figur 4 genauer gezeigte) Oberseite des Gleitelements 4, die beim Gleiten in der Platten-Nut 5 mit deren oberer Wand in Berührung kommt, ist mit einem Zahn 11 versehen, der auf die obere Wand der genannten Nut 5 (d.h. auf die Oberseite der Platte 2) eingestellt werden kann, wenn das Gleitelement 4 aus der Nut 5 herausgezogen wird.

Dem Zahn 11 entsprechen zwei weitere, an der oberen Wand der Platten-Nut 5 angeordnete kleine Zähne 12 (von denen nur einer in den Zeichnungen gezeigt ist, Figur 2). Der Zahn 11 läuft in eine zwischen den kleinen Zähnen 12 liegende Rastschulter 13 ein, wenn das Gleitelement 4 vollständig in die Nut eingeschoben wird. Die Zähne 12 gleiten in zwei (nicht explizit dargestellten) Nuten an der Oberseite des Gleitelements 4, die mit der oberen Wand der Nut 5 in Berührung steht.

Die Gleitelement-Nuten lassen das Gleitelement 4 gleiten, bis der Zahn 11 in die Oberseite der Platten-Nut 5 eingreift und die Zähne 12 entlang der Gleitelement-Nuten bis zu deren Enden gelaufen sind, wobei das Gleitelement 4 vollständig herausgezogen wird.

An den Seiten des in die Platten-Nut 5 einzuschiebenden Endabschnitts des Gleitelements 4 ist ein erstes Paar von Gummipuffern 14 angeordnet (von denen in den Zeichnungen nur einer zu sehen ist), und zwar ein Puffer pro Seite jeweils nahe der Oberseite des Gleitelements 4.

An den Seiten der Platten-Nut 5 ist ein zweites Paar von Gummipuffern 15 angeordnet (von denen in den Zeichnungen nur einer zu sehen ist), und zwar ein Puffer pro Seite, um im Zusammenwirken mit dem ersten Paar von Gummipuffern 14 die Schwingungen des Gleitelements 4 zu dämpfen.

Im leeren Endabschnitt des Gleitelements 4 ist ein Gleitblock 17 angeordnet. Dieser wird in dem Endabschnitt mittels eines Flachstücks 10 gehalten, wie oben erwähnt.

Ein vom Benutzer manuell faßbares Griffstück 18 des Gleitblocks 17 ragt aus dem Gleitelement 4 hervor. Am anderen Ende trägt der Gleitblock 17 eine Rastklinke 19, deren Oberseite gezahnt ist und die mittels eines Stifts 20 am Ende des Gleitblocks 17 befestigt ist.

Der Stift 20 sitzt in einer Feder 21, welche die Rastklinke 19 nach oben vorspannt, so daß diese nach oben zurückkehrt, wenn der Benutzer nicht mehr auf das Griffstück 18 drückt, wie weiter unten näher beschrieben.

Die untere Fläche der oberen Seite 16 des Gleitelements 4 ist gezahnt, und zwar entsprechend der Zahnung 23 der Rastklinke 19.

Die Zähne der gezahnten Fläche 16 haben die gleiche Neigung wie die Zähne der gezahnten Fläche 23, das heißt, sie sind zueinander komplementär.

Der Gleitblock 17 kann gegen die Kraft einer Feder 40, die auf eine am Gleitblock 17 ausgebildete Fläche 41 wirkt, in den leeren Endabschnitt des Gleitelements 4 eindringen, bis die Rastklinke 19 an den Anschlag 22 stößt. Wenn der Benutzer auf das herausstehende Griffstück 18 drückt, schwenkt die Rastklinke 19 um den Stift 20 nach unten und gibt dabei die Zahnung 23 aus der Zahnung 16 des Gleitelements 4 frei. Auf diese Weise ist es möglich, das Sperrteil 6 aus dem Gleitelement 4 mittels des Handgriffs 7 herauszuziehen.

Durch die Neigung der Zähne der gezahnten Flächen 16 und 23 kann die Rastklinke 19 mit der gezahnten Fläche 16 in Berührung treten und somit verhindern, daß sich das Sperrteil 6 aus dem Gleitelement 4 herausbewegt, während das Gleitelement 4 aus der Platte 2 herausgezogen wird. Andererseits erlaubt die Rastklinke 19 eine Bewegung in die entgegengesetzte Richtung, so daß der gewölbte Ansatz 8 auf den Handgriff oder ein ähnliches Teil des Aktenkoffers eingestellt werden kann.

Im Handgriff 7 ist ein mit einem Schlüssel 25 versehenes Schloß 24 angeordnet. Wenn der Schlüssel gedreht wird, schwenkt ein Riegel 26 mit. Im Sperrzustand greift dieser Riegel in eine Kerbe 27 ein, die an der Oberseite des Griffstücks 18 ausgebildet ist.

Um einen Diebstahl des Aktenkoffers zu verhindern, muß der Schlüssel 25 gedreht werden, nachdem das Sperrteil 6 so eingestellt wurde, daß es mit dem Handgriff des Aktenkoffers zusammenwirkt. Mithin verhindert der in die Kerbe 27 eingreifende Riegel 26, daß das Griffstück 18 nach innen gedrückt werden kann.

Die Platte 2 ist mit verschiedenen Bohrungen 28 versehen, mit deren Hilfe die Vorrichtung an unterschiedlichen Arten von Gepäckträgern oder Motorradrahmen montiert werden kann.

Die Platte 2 kann horizontal oder vertikal montiert werden. Bezüglich der Straße kann der Aktenkoffer daher parallel oder senkrecht zur Fahrbahn angeordnet werden.

Eine Anzahl von an der Oberseite der Platte 2 angeordneten Gummipuffern 29 wirken als Dämpfer zum Schutz des Aktenkoffers vor möglichen Stößen und sichern eine stabile Lagerung auf der Platte 2.

Die Platte 2 ist vorzugsweise aus Kunststoff gefertigt und mit konstruktiven Verstärkungsgliedern 30 ausgestattet, welche die Herstellung einer Platte ermöglichen, die leicht und zugleich widerstandsfähig ist.

Ferner werden das Gleitelement 4 und das Sperrteil 6 in gleicher Weise wie die Platte 2 hergestellt und weisen konstruktive Verstärkungsglieder 31 gleicher Art auf.

Die Höhenverstellung des Rückhaltebügels 3 schließlich erfolgt mit Hilfe von Klemmen 32 und 33, die in den beiden Winkeln des (kurzschenkligen) ersten Endes der Platte 2 unterhalb des Rückhaltebügels 3 eingesetzt sind.

Der rohrförmige Abschnitt des Rückhaltebügels 3 ist mit Stäben versehen, die in Bohrungen der Platte verschiebbar sind. Unter diesen Bohrungen befinden sich die genannten Klemmen 32 und 33. Die Stäbe treten durch diese Klemmen hindurch in Hohlblöcke 34 und 35.

Eine Verstellung der Klemmen 32 und 33 ist dank eines Werkzeugs möglich, das von außerhalb der Platte 2 die Schrauben dreht, welche die genannten Klemmen 32 und 33 anziehen oder lockern.

Die Funktion der Halterung 1 wurde bereits teilweise beschrieben. Im folgenden wird die Vorgehensweise beschrieben, die der Benutzer zu befolgen hat, um den Aktenkoffer in die Halterung einzusetzen.

Nachdem die Platte 2 am Gepäckträger oder am Rahmen des Motorrads befestigt worden ist (diese Arbeit braucht nur einmal anfangs erledigt zu werden, da die Platte 2 am Gepäckträger bzw. Rahmen auf Dauer befestigt bleibt), verstellt der Benutzer die Höhe des Rückhaltebügels 3, um sie an die Dicke des Aktenkoffers anzupassen. Diese Anpassung erfolgt einmalig und braucht nur dann wiederholt zu werden, wenn der Benutzer zu einem späteren Zeitpunkt einen Aktenkoffer anderer Dicke einlegen möchte.

Der Benutzer faßt den Handgriff 7 und zieht das Gleitelement 4 aus der Platte 2 heraus, wobei die Zähne 12 in den Nuten gleiten, die an der Oberseite des Gleitelements 4 ausgebildet sind.

Der Benutzer drückt auf das knopfförmig vorspringende Griffstück 18, um das Sperrteil 6 entsprechend den Abmessungen des Aktenkoffers herauszuziehen, der nun unter dem Rückhaltebügel 3 liegt.

Das Sperrteil 6 wirkt mit dem Handgriff des Aktenkoffers zusammen und hält den Aktenkoffer unter Druckausübung gegen den Rückhaltebügel 3, um Bewegungen des Aktenkoffers zu verhindern und ihn an der Platte 2 festzuhalten.

Schließlich ermöglicht es der Schlüssel 25, eine Wegnahme des Aktenkoffers von der Platte 2 zu verhindern, da das Schloß ein Herausziehen des Sperrteils 6 verhindert.

Dies hängt mit der Wirkung des Riegels 26 zusammen, der in die Kerbe 27 eingreift und dadurch Bewegungen des Gleitblocks 17 unterbindet. Dadurch bleibt die Zahnung 23 der Rastklinke 19 in Eingriff mit der Zahnung 16.

Es hat sich gezeigt, daß die Halterung die Aufgabe, für die sie entwickelt wurde, genau erfüllt, da die Halterung es ermöglicht, auf einem Motorrad einen Aktenkoffer zu transportieren, der normalerweise nicht in einen standardmäßigen, am Gepäckträger oder Rahmen des Motorrads montierten Schalenkoffer eingelegt werden kann.

Eine Halterung des solcherart entwickelten Typs kann im Rahmen der Patentanmeldung auf verschiedene Weise abgewandelt werden; außerdem können alle Einzelheiten durch technisch gleichwirkende andere Bauelemente ersetzt werden.

Sowohl die Abmessungen als auch die Werkstoffe können entsprechend den Anforderungen und dem Stand der Technik geändert werden.

## Patentansprüche

1. Halterung (1) für Behälter im allgemeinen und Aktenkoffer im besonderen, geeignet für Motorräder u. dgl., wobei die Besonderheit der Halterung (1) in einer Platte (2) besteht, die an einem Motorrad befestigt werden kann und dadurch gekennzeichnet ist, daß sie an einem Ende ein Rückhalteteil (3) und am anderen Ende ein Gleitelement (4) aufweist, das teleskopisch aus der Platte (2) herausgezogen werden kann und mit einem Sperrteil (6) versehen ist, das seinerseits teleskopisch aus dem Gleitelement (4) herausgezogen werden kann, so daß dank dem Sperrteil (6) und dem Rückhalteteil (3) ein Aktenkoffer an der Platte (2) befestigt werden kann.

2. Halterung (1) nach Anspruch 1, dadurch gekennzeichnet, daß die Platte (2) an ihrer Unterseite in der Mitte mit einer Platten-Nut (5) versehen ist, in der das Gleitelement (4) gleitet.

3. Halterung (1) nach Anspruch 2, wobei das Gleitelement (4) in der Platten-Nut (5) durch ein Flachstück (9) gehalten ist, das an der Platte (2) quer zur Platten-Nut (5) angeschraubt ist.

4. Halterung (1) nach einem oder mehreren der vorangehenden Ansprüche, wobei eine Fläche der Platten-Nut (5) ein Paar von Zähnen (12) sowie eine Rastschulter (13) aufweist, in die ein weiterer Zahn (11) eingreift, der an der Oberseite des Gleitelements (4) ausgebildet ist.

5. Halterung (1) nach einem oder mehreren der vorangehenden Ansprüche, wobei die Oberseite des Gleitelements (4) ein Paar von Gleitelement-Nuten aufweist, in die Zähne (12) eingreifen, die an der Unterseite der Platten-Nut (5) ausgebildet sind und im Zusammenwirken mit den Gleitelement-Nuten den Lauf des Gleitelements (4) begrenzen.

6. Halterung (1) nach einem oder mehreren der vorangehenden Ansprüche, wobei das Gleitelement (4) an seinem dem Ende der Platte (2) zugewandten Endabschnitt einen hohlen Abschnitt aufweist, in dem das Sperrteil (6) gleitet.

7. Halterung (1) nach einem oder mehreren der vorangehenden Ansprüche, wobei der hohle Abschnitt des Gleitelements (4) an der Unterseite seiner oberen, die Platten-Nut (5) berührenden Wand eine Zahnung (16) aufweist.

8. Halterung (1) nach einem oder mehreren der vorangehenden Ansprüche, wobei das Sperrteil (6) einen im Sperrteil (6) beweglichen Gleitblock (17) aufweist und aus dem Sperrteil (6) ein druckknopfförmiges Griffstück (18) des Gleitblocks (17) ragt, auf das der Benutzer von außerhalb des zweiten Endabschnitts der Platte (2) drücken kann.

9. Halterung (1) nach einem oder mehreren der vorangehenden Ansprüche, wobei der Gleitblock (17) durch ein Flachstück (10) im Inneren des Sperrteils (6) gehalten ist.

10. Halterung (1) nach einem oder mehreren der vorangehenden Ansprüche, wobei das Flachstück (10) die gleiche Gestalt und die gleichen Abmessungen besitzt wie das Flachstück (9), welches das Gleitelement (4) in der Platten-Nut (5) hält.

11. Halterung (1) nach einem oder mehreren der vorangehenden Ansprüche, wobei das dem druckknopfförmigen Griffstück (18) entgegengesetzte Ende des Gleitblocks (17) eine Rastklinke (19) aufweist, deren Oberseite mit einer Zahnung (23) versehen ist und die an diesem Ende des Gleitblocks (17) mittels eines Stifts (20) befestigt ist.

12. Halterung (1) nach einem oder mehreren der vorangehenden Ansprüche, wobei die Zahnung (23) der Rastklinke (19) komplementär zur Zahnung (16) an der Unterseite der oberen Wand des Gleitelements (4) ist.

13. Halterung (1) nach einem oder mehreren der vorangehenden Ansprüche, wobei die Zähne der Zahnung (16) des Gleitelements (4) und die Zähne der Zahnung (23) der Rastklinke (19) die gleiche Neigung haben.

14. Halterung (1) nach einem oder mehreren der vorangehenden Ansprüche, wobei der Gleitblock (17) an seinem dem druckknopfförmigen Griffstück (18) entgegengesetzten Ende eine Anschlagfläche (41) aufweist, die beim Lauf des Gleitblocks (17) auf die Rastklinke (19) trifft.

15. Halterung (1) nach einem oder mehreren der vorangehenden Ansprüche, mit einem elastischen Organ (21), das die Rastklinke (19) nach oben vorspannt, so daß sie mit der Unterseite der oberen Wand des Gleitelements (4) zusammenwirken kann.

16. Halterung (1) nach einem oder mehreren der vorangehenden Ansprüche, wobei das Sperrteil (6) mit einem Handgriff (7) versehen ist, um das Gleitelement (4) aus der Platte (2) und das Sperrteil (6) aus dem Gleitelement (4) herauszuziehen.

17. Halterung (1) nach einem oder mehreren der vorangehenden Ansprüche, wobei das Sperrteil (6) mit einem gebogenen Ansatz (8) versehen ist, der auf den Handgriff eines Aktenkoffers oder dergleichen einstellbar ist.

18. Halterung (1) nach einem oder mehreren der vorangehenden Ansprüche, wobei das Sperrteil (6) mit einem Schloß (24) versehen ist, das eine Bewegung der vorgenannten Rastklinke (19) und des Sperrteils (6) verhindert.

19. Halterung (1) nach einem oder mehreren der vorangehenden Ansprüche, wobei die Platte (2) L-förmig ist und mit verschiedenen Bohrungen zur Montage am Gepäckträger oder am Rahmen des Motorrads versehen ist.

20. Halterung (1) nach einem oder mehreren der vorangehenden Ansprüche, wobei das Rückhalteteil (3) mittels Klemmen (32, 33) höhenverstellbar ist.

21. Halterung (1) nach einem oder mehreren der vorangehenden Ansprüche, wobei die Halterung (1) eines oder mehrere der beschriebenen und/oder in den Zeichnungen dargestellten Merkmale aufweist.
